# EUROPEAN PATENT SPECIFICATION

(11) **EP 2 981 030 B1**
(45) Date of publication and mention of the grant of the patent: **31.07.2019**
(21) Application number: 14775639.9
(22) Date of filing: 10.03.2014
(51) Int. Cl.: H04L 12/46, H04L 12/749, H04L 29/12, H04L 29/06

(54) **TRANSFER DEVICE**
ÜBERTRAGUNGSVORRICHTUNG
DISPOSITIF DE TRANSFERT

(30) Priority: 26.03.2013 JP 2013064872
(43) Date of publication of application: 03.02.2016
(73) Proprietor: KDDI Corporation, Tokyo 163-8003 (JP)
(72) Inventor: MIYAMOTO, Takahiro, Fujimino-shi Saitama 356-8502 (JP)
(74) Representative: Pitchford, James Edward
(86) International application number: PCT/JP2014/001338
(87) International publication number: WO 2014/156009

(56) References cited:
- JP-A- 2008 154 066
- JP-A- 2012 080 274
- US-A1- 2004 249 911
- US-A1- 2011 026 537
- US-A1- 2012 117 237

## Description

### TECHNICAL FIELD

The present invention relates to a technique for name resolution in a virtual private network (VPN).

### BACKGROUND ART

VPNs are used for interconnection of local area networks (LANs) in a plurality of locations of a company. Communication apparatuses in a LAN, other than communication apparatuses that are open to the Internet, use only private IP (Internet Protocol) addresses. Accordingly, cases may exist in which two communication apparatuses that are connected to different LANs are using the same IP address. For this reason, Patent Document 1 discloses a configuration in which an address translation is performed when IP addresses in different LANs are the same. Also, Patent Document 2 discloses a VPN management apparatus that collectively controls VPN apparatuses that connects a plurality of LANs via VPN.

### CITATION LIST

### PATENT LITERATURE

[Patent Document 1] Japanese Patent Laid-Open No. 2005-142702
[Patent Document 2] Japanese Patent Laid-Open No. 2003-101569

Further background art is provided in US 2012/117237 A1 and US 2004/249911 A1.

US 2012/117237 A1 discloses a network device which comprises a storage device storing an application program for a secure communications service; and at least one processor configured to execute the application program enabling the network device to: (a) send a request to look up a network address of a second network device based on an identifier; (b) receive an indication that the second network device is available for the secure communications service, the indication including the requested network address of the second network device and provisioning information for a secure communication link; (c) connect to the second network device over the secure communication link, using the received network address of the second network device and the provisioning information for the secure communication link; and (d) communicate at least one of video data and audio data with the second network device using the secure communications service via the secure communication link.

US 2004/249911 A1 discloses a private virtual dynamic network for computing devices coupled to public networks or private networks, which enables computing devices to join into private enterprise intranets and communicate with each other. One embodiment provides a separate private virtual address realm, seen to each user as a private network, while crossing public and private network boundaries. One implementation uses an agent to enable an entity to participate in the network without requiring the member to add new hardware or software.

### SUMMARY OF INVENTION

### TECHNICAL PROBLEM

Currently, use of VPNs in order to interconnect LANs of different companies has started. When LANs of different companies are connected by VPNs, for reasons of security, it is necessary to restrict communication via the VPN such that it is only possible between specific communication apparatuses, rather than permitting communication between any of the communication apparatuses connected to the LANs of the different companies. Also, because the communication apparatuses within the LANs are usually using private IP addresses, name resolution for a communication apparatus that is connected only to a LAN of a company cannot be performed in a DNS (Domain Name System) that can be used on the Internet. Furthermore, there are cases in which two communication apparatuses that are connected to LANs of different companies are using the same IP addresses.

Patent Document 1 discloses a configuration in which overlapping IP addresses are translated, but cannot control so as to permit communication by only specific communication apparatuses. Also, by the methods disclosed in Patent Documents 1 and 2, name resolution of a destination communication apparatus that is connected to a LAN of another company cannot be performed.

### SOLUTION TO PROBLEM

The present invention is a transfer apparatus as defined in Claim 1 of the appended claims.

According to one embodiment of the present invention there is provided a transfer apparatus that, for communication between a communication apparatus of a first network and a communication apparatus of a second network via a virtual private network, connects the first network and the virtual private network and performs transferring of a packet between the first network and the virtual private network, the transfer apparatus comprising: determination means for determining, when a request to communicate with a second communication apparatus of the second network or a query for an address of the second communication apparatus is received from a first communication apparatus of the first network, whether communication between the first communication apparatus and the second communication apparatus via the virtual private network is permitted; and address determination means for, when communication between the first communication apparatus and the second communication apparatus via the virtual private network is permitted, determining a destination address that the first communication apparatus uses when communicating with the second communication apparatus, and notifying the first communication apparatus of the destination address.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain the principles of the invention.
FIG. 1 is a system configuration diagram according to an embodiment.
FIG. 2 is a configuration diagram for a VPN apparatus according to an embodiment.
FIG. 3 is a sequence diagram for name resolution and address assignment according to an embodiment.
FIG. 4 is a sequence diagram for name resolution and address assignment according to an embodiment.
FIG. 5A is a view for illustrating information that a controller holds according to an embodiment.
FIG. 5B is a view for illustrating information that the controller holds according to an embodiment.
FIG. 5C is a view for illustrating information that a VPN apparatus holds according to an embodiment.

### DESCRIPTION OF EMBODIMENTS

Exemplary embodiments of the present invention will be described hereinafter with reference to the drawings. Note that elements that are not necessary for the explanation of the embodiments are omitted from the figures below.

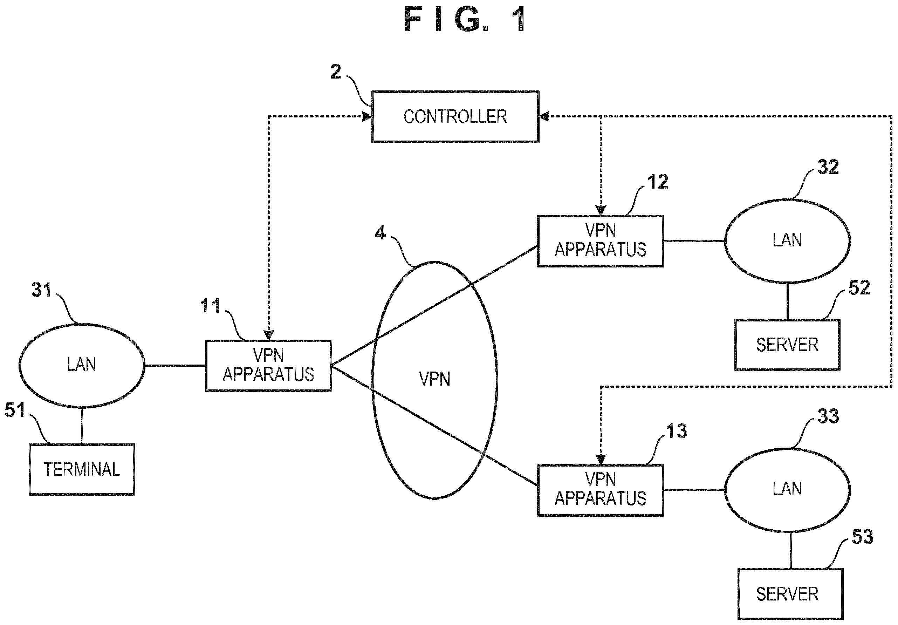

FIG. 1 is a system configuration diagram used for explanation of an embodiment. In FIG. 1, a VPN apparatus 11 is connected to VPN apparatuses 12 and 13 via a VPN 4. Note that in the present embodiment, VPN apparatus means a transfer apparatus that performs a relay between a VPN (Virtual Private Network) and a LAN (Local Area Network). Also, in the example of FIG. 1, LANs 31, 32 and 33 are respectively company networks of different companies. Note that in FIG. 1, a terminal 51, a server 52, and a server 53, which are communication apparatuses, are respectively connected to the LAN 31, the LAN 32 and the LAN 33. A controller 2, for example, is installed by a communications carrier that provides the VPN 4, and the controller 2 holds connection information indicating which communication apparatuses of which companies communication is permitted between, and addresses used in the VPN 4 for permitted communication between apparatuses. Note that though not shown, the LANs 31, 32 and 33 are connected to the Internet. Below, explanation of an embodiment will be given assuming using the configuration of FIG. 1 as an example.

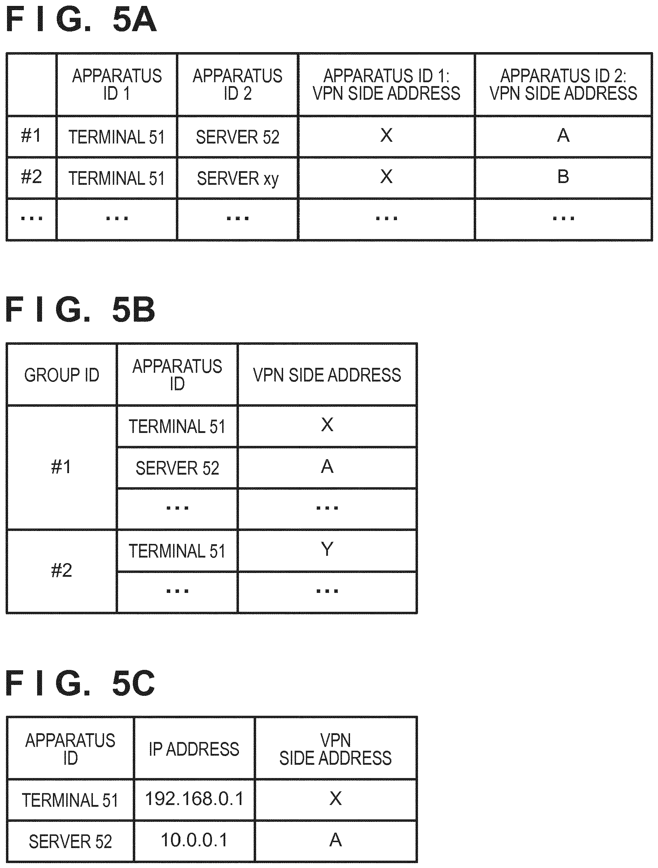

An example of connection information that the controller 2 holds is illustrated in FIG. 5A. An entry having a number #1 in FIG. 5A indicates that communication by the terminal 51 of the LAN 31 and the server 52 of the LAN 32 via the VPN 4 is permitted. Furthermore the entry having the number #1 indicates that when the terminal 51 of the LAN 31 and the server 52 of the LAN 32 communicate via the VPN 4, in the VPN 4, address X is used as an address of the terminal 51, and address A is used as an address of the server 52. Additionally, it is assumed that a combination of the terminal 51 of the LAN 31 and the server 53 of the LAN 33 is something that is not included in the connection information of FIG. 5A. Accordingly, the connection information of FIG. 5A indicates that communication by the terminal 51 of the LAN 31 and the server 53 of the LAN 33 via the VPN 4 is not permitted.

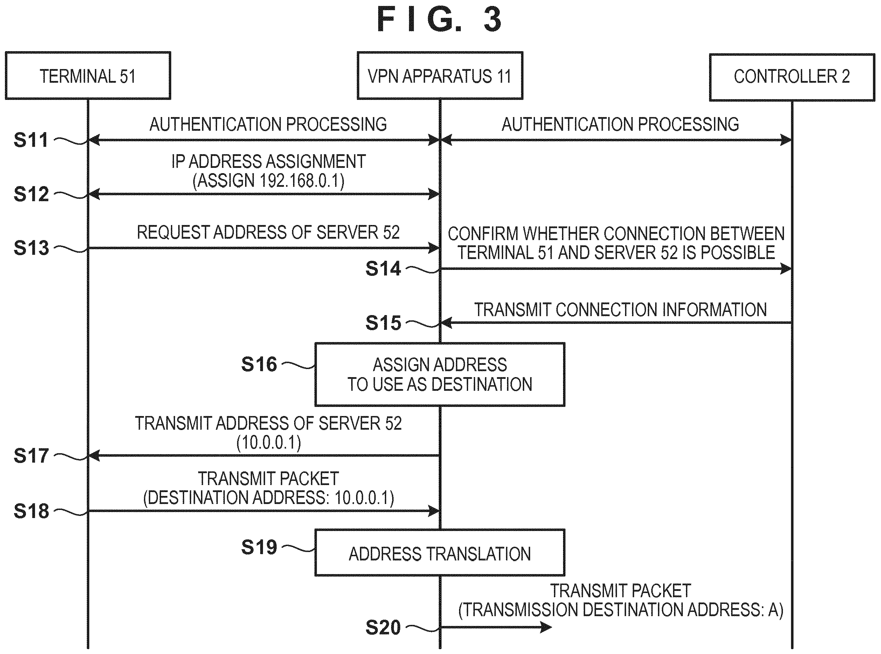

FIG. 3 illustrates a sequence for when the terminal 51 of the LAN 31 and the server 52 of the LAN 32 communicate. In step S11, the terminal 51 performs authentication processing with the VPN apparatus 11. Note that for the authentication processing, for example, a method that complies with IEEE 802.1X can be used. In the present embodiment, it is assumed that the VPN apparatus 11 transmits to the controller 2 authentication information that the terminal 51 transmits in the authentication processing, and the controller 2 performs an authentication of the terminal 51, and transmits an authentication result to the VPN apparatus 11. However, authentication may be performed on the VPN apparatus 11. Also, when the authentication of the terminal 51 succeeds, the VPN apparatus 11 saves for a predetermined period something to that effect. By this configuration, it is possible to omit processing between the VPN apparatus 11 and the controller 2 in step S11 when the VPN apparatus 11 holds information that the authentication of the terminal 51 already succeeded.

In step S12, the VPN apparatus 11 assigns an IP address of the terminal 51. Note that when an IP address is already assigned to the terminal 51, the processing of step S12 is omitted. In step S13, the terminal 51 transmits a request to communicate with the server 52 to the VPN apparatus 11 in order to communicate with the server 52. The request to communicate is a message for querying an IP address of the server 52 which includes identification information of the server 52. Note that for the identification information of the server 52, for example, a fully qualified domain name can be used. The VPN apparatus 11, in step S14, queries the controller 2 as to whether communication via the VPN 4 between the terminal 51 and the server 52 is permitted. In the present example, as is illustrated in FIG. 5A, because communication via the VPN 4 between the terminal 51 and the server 52 is permitted, the controller 2 transmits connection information corresponding to the entry having the number #1 in FIG. 5A to the VPN apparatus 11 in step S15.

The VPN apparatus 11, when it receives the connection information from the controller 2, generates, in step S16, an address that the terminal 51 uses as a destination address in the communication between the terminal 51 and the server 52. Here, it is assumed that 10.0.0.1 is generated. The VPN apparatus 11, in step S17, notifies the terminal 51 of the address generated in step S16. Also, the VPN apparatus 11 manages the address, which notifies as the address of the server 52 in association with the address assigned to the terminal 51, as is illustrated in FIG. 5C.

When, in step S18, the terminal 51 transmits a packet that has the address of the server 52 as a destination address, the VPN apparatus 11, translates, in step S19, the transmission source address, i.e. 192.168.0.1 and the destination address, i.e. 10.0.0.1 to the address X and the address A respectively, in accordance with the information illustrated in FIG. 5C, and transmits to the VPN apparatus 12 in step S20.

Note that the VPN apparatus 12 makes a query to the controller 2 when a communication apparatus on the LAN 32 corresponding to the destination address A cannot be identified. Also, because the VPN apparatus 11 saves the information illustrated in FIG. 5C in step S16, thereafter the packet is transferred in accordance with the information illustrated in FIG. 5C when a packet having 10.0.0.1 as a destination address is received from the terminal 51, and the processing from step S11 to step S17 becomes unnecessary. Additionally, configuration may be taken in which, for example, a validity period is provided for the information illustrated in FIG. 5C, where the information is discarded after the validity period has elapsed. With this, even when a setting of the controller 2 is changed, the change can be reflected in the VPN apparatus 11.

A VPN apparatus according to this embodiment queries the controller 2 which manages the VPN 4 as to whether communication between communication apparatuses on different LANs is permitted, and if it is permitted, the VPN apparatus itself determines an address to be used as a destination, and communicates that to the communication apparatus which is the source of the request for communication. The address that is determined here can be determined to be an address that does not overlap with an address of a communication apparatus on the LAN to which the VPN apparatus is connected irrespective of the address that the actual communication partner is using. For example, the determined address can be made to be an address of a subnet that is different to that of the LAN to which the VPN apparatus is connected. Additionally, the determined address can be made to not overlap with an address already communicated as a destination address to each of the communication apparatuses in the LAN to which the VPN apparatus is connected. However, if a communication apparatus that a destination address indicates is specified by a set of a transmission source address and the destination address, the determined address may be made to be different to what was already communicated as a destination address to the communication apparatus which is the source of the request for the communication. In such a case, when the VPN apparatus receives a packet, the destination communication apparatus is identified based on the set of the transmission source address and the destination address, and translation into the address used by the VPN 4 is performed. By this configuration, the degree of freedom in determination of the destination address on the VPN apparatus is increased. By the above configuration, it is possible to solve a problem of IP address overlapping in a connection via the VPN 4 between different LANs, and provide name resolution. Also, it is possible to limit communication via the VPN 4 to between permitted communication apparatuses.

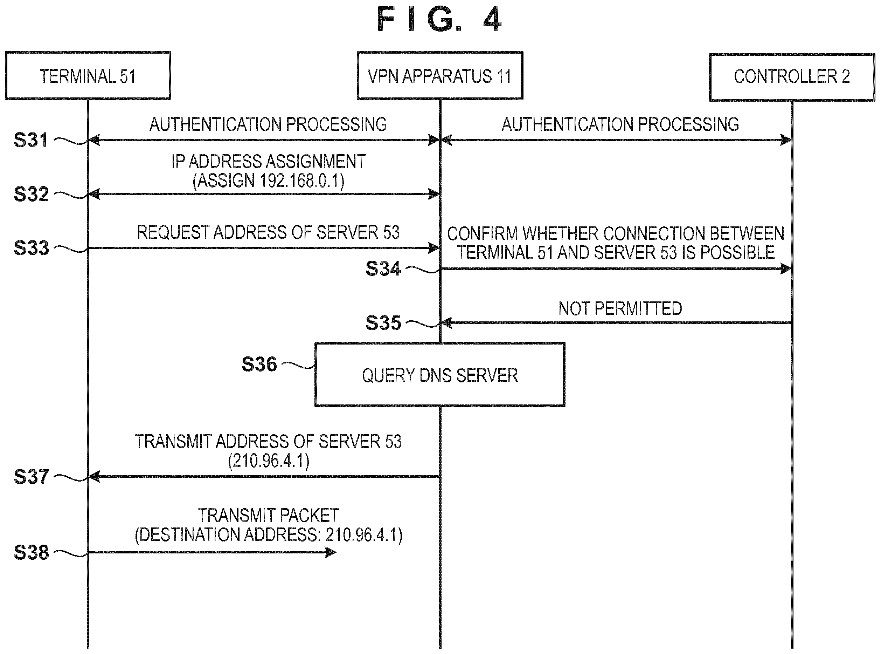

FIG. 4 illustrates a sequence for when the terminal 51 of the LAN 31 and the server 53 of the LAN 33 communicate. Note that communication via the VPN 4 is not permitted between the terminal 51 and the server 53 as was explained previously. Additionally, in the present example, the server 53 is a server that is available on the Internet, and accordingly, communication via the Internet between the terminal 51 and the server 53 is possible.

Step S31 and step S32 of FIG. 4 are the same as step S11 and step S12 of FIG. 3, and so explanation of these once again will be omitted. In step S33, the terminal 51 queries the IP address of the server 53 by transmitting identification information of the server 53 to the VPN apparatus 11 in order to communicate with the server 53. The VPN apparatus 11, in step S34, queries the controller 2 as to whether communication via the VPN 4 between the terminal 51 and the server 53 is permitted. In the present example, because communication via the VPN 4 is not permitted between the terminal 51 and the server 53, the controller 2, in step S35, notifies the VPN apparatus 11 that it is not permitted.

Because, in this case, the communication between the terminal 51 and the server 53 is via the Internet, the VPN apparatus 11, in step S36, queries an external DNS server for the IP address of the server 53, thereby obtaining an IP address for accessing the server 53 via the Internet. After that, the VPN apparatus 11, in step S37, communicates the IP address of the server 53 obtained in step S36 to the terminal 51. In step S38, the terminal 51 accesses the server 53 via the Internet using the IP address communicated from the VPN apparatus 11. Note that in the present example, in a case where the server 53 is a communication apparatus that is not open to the Internet, the VPN apparatus 11 cannot obtain the IP address of the server 53 in step S36, and accordingly communicates something to that effect to the terminal 51 in step S37.

Additionally, in the explained embodiment, the controller 2 holds information indicating a set of two communication apparatuses capable of communicating via the VPN 4. However, if, for example, communication is possible between any two of a plurality of communication apparatuses, the controller 2 can manage the plurality of the communication apparatuses capable of communicating with each other as a group, as is illustrated in FIG. 5B. For example, in FIG. 5B it is illustrated that two groups, #1 and #2, exist, and the terminal 51 belongs to both groups. Here, all communication is permitted via the VPN 4 for any two of the communication apparatuses in group #1, even if they belong to different LANs, for example. Accordingly, when, in step S14 of FIG. 3, for example, a query as to whether or not communication is permitted between the terminal 51 and the server 52 is received, the controller 2 can transmit to the VPN apparatus 11 the group information of group #1 illustrated in FIG. 5B as the connection information. Alternatively, an embodiment may transmit VPN side addresses for the terminal 51 and the server 52 in the group information, and a group identifier. The VPN apparatus 11 manages the received group identifier by adding it to the information illustrated in FIG. 5C. For example, without querying the controller 2, the VPN apparatus 11 can determine, by receiving the same group identifier from the controller 2 in name resolution in communication with another communication apparatus, that this other communication apparatus and the terminal 51 or the server 52 can communicate via the VPN 4.

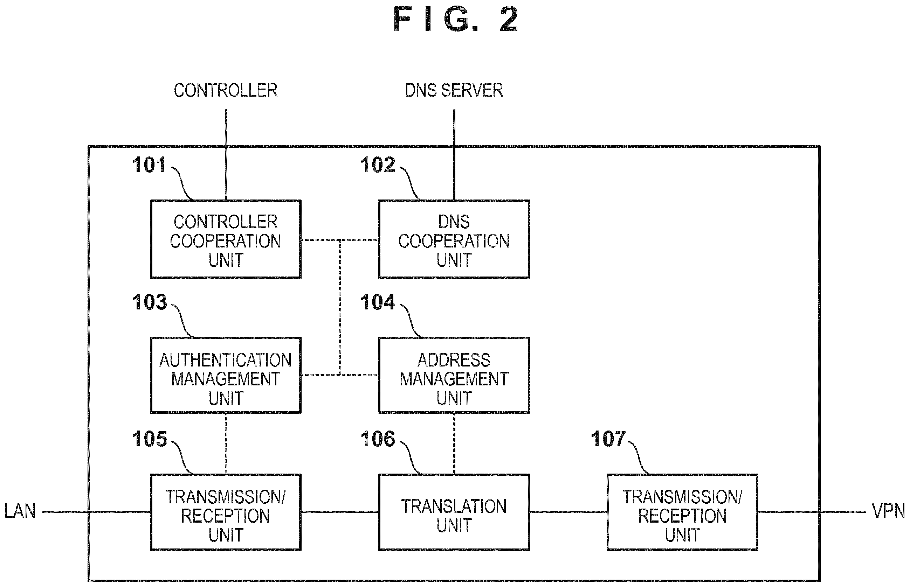

FIG. 2 is an overview configuration diagram for a VPN apparatus according to an embodiment. A transmission/reception unit 105 transmits/receives packets with a LAN, and a transmission/reception unit 107 performs transmission/reception of packets with the VPN 4. Also a translation unit 106 performs address translation of a packet transmitted/received between the LAN and the VPN 4 based on the address translation information of FIG. 5C which an address management unit 104 holds. Additionally, the address management unit 104 performs address assignment processing in step S12 of FIG. 3, address determination processing in step S16, destination address communication processing in step S17, or the like. Furthermore, it performs the query to the DNS server in step S36.

An authentication management unit 103 performs authentication processing illustrated in step S11 of FIG. 3. Furthermore, the authentication management unit 103 queries the controller 2 as to whether communication via the VPN 4 with a query target communication apparatus is permitted for a communication apparatus that performed an IP address query by executing the processing of step S14 and step S15, or makes the determination by the information of FIG. 5C. A controller cooperation unit 101 performs processing for communication with the controller 2. A DNS cooperation unit 102 performs the processing for obtaining an IP address from the external DNS server in step S36 of FIG. 4.

Note, the present invention is not limited to the embodiment described above, and it is possible to make various modifications or changes without departing from the scope of the present invention as defined in the following claims. For example, in the explained embodiments, the LANs 31, 32 and 33 are assumed to be networks of different companies, but the present invention can be applied even if they belong to the same company. This is because even if it is the same company, there is an advantage that address adjustment, or the like, between locations becomes unnecessary. Accordingly, the following claims are attached to make public the scope of the present invention.

## Claims

1. A transfer apparatus (11) for connection to a first network (31) and a virtual private network (4) and for transferring a packet between the first network (31) and the virtual private network (4) for communication between a communication apparatus of the first network (31) and a communication apparatus of a second network (32) via the virtual private network (4), the transfer apparatus (11) comprising:
determination means (103) for determining, when a request to communicate with a second communication apparatus (52) of the second network (32) or a query for an address of the second communication apparatus (52) is received from a first communication apparatus (51) of the first network (31), whether communication between the first communication apparatus (51) and the second communication apparatus via the virtual private network (4) is permitted;
address determination means (104) for determining, when communication between the first communication apparatus (51) and the second communication apparatus (52) via the virtual private network (4) is permitted, a destination address that the first communication apparatus (51) uses when communicating with the second communication apparatus (52), and that does not overlap with an address of a communication apparatus that connects to the first network (31), and for notifying the first communication apparatus (51) of the destination address; and
transmission means (106, 107) for translating, when a packet including the determined destination address is received from the first communication apparatus (51), the destination address of the packet and a transmission source address of the packet into predetermined addresses used in the virtual private network (4) in accordance with a combination of the destination address of the packet and the transmission source address of the packet, and for transmitting the packet to the virtual private network (4).

2. The transfer apparatus according to claim 1, wherein the determination means (103) is configured to query, when not holding information that communication between the first communication apparatus (51) and the second communication apparatus (52) via the virtual private network (4) is permitted, a controller (2) of the virtual private network (4) as to whether communication between the first communication apparatus (51) and the second communication apparatus (52) via the virtual private network (4) is permitted.

3. The transfer apparatus according to claim 1, wherein the predetermined addresses used in the virtual private network (4) are obtained from a controller (2) of the virtual private network (4).

4. The transfer apparatus according to any one of claims 1 to 3, wherein the address determination means (104) is configured to query, when communication between the first communication apparatus (51)and the second communication apparatus (52) via the virtual private network (4) is not permitted, a server on the Internet for the address of the second communication apparatus (52), and, when the address of the second communication apparatus (52) can be obtained from the server on the Internet, to notify the first communication apparatus (51) of the obtained address.

5. The transfer apparatus according to any one of claims 1 to 4, wherein the determination means (103) is configured to manage, when communication between any one of a plurality of communication apparatuses of the first network (31) and any one of a plurality of communication apparatuses of the second network (32) via the virtual private network (4) is permitted, the plurality of communication apparatuses of the first network (31) and the plurality of communication apparatuses of the second network (32) as a group.

## Patentansprüche

1. Übertragungsvorrichtung (11) zur Verbindung mit einem ersten Netzwerk (31) und einem virtuellen privaten Netzwerk (4) undzum Übertragen eines Pakets zwischen dem ersten Netzwerk (31) und dem virtuellen privaten Netzwerk (4) zur Kommunikation zwischen einer Kommunikationsvorrichtung des ersten Netzwerks (31) und einer Kommunikationsvorrichtung eines zweiten Netzwerks (32) über das virtuelle private Netzwerk (4), wobei die Übertragungsvorrichtung (11) Folgendes umfasst:
ein Bestimmungsmittel (103) zum Bestimmen, wenn eine Anfrage zur Kommunikation mit einer zweiten Kommunikationsvorrichtung (52) des zweiten Netzwerks (32) oder eine Abfrage für eine Adresse der zweiten Kommunikationsvorrichtung (52) von einer ersten Kommunikationsvorrichtung (51) des ersten Netzwerks (31) empfangen wird, ob eine Kommunikation zwischen der ersten Kommunikationsvorrichtung (51) und der zweiten Kommunikationsvorrichtung über das virtuelle private Netzwerk (4) zulässig ist;
ein Adressbestimmungsmittel (104) zum Bestimmen, wenn eine Kommunikation zwischen der ersten Kommunikationsvorrichtung (51) und der zweiten Kommunikationsvorrichtung (52) über das virtuelle private Netzwerk (4) zulässig ist, einer Zieladresse, die die erste Kommunikationsvorrichtung (51) verwendet, wenn sie mit der zweiten Kommunikationsvorrichtung (52) kommuniziert, unddie sich nicht mit einer Adresse einer Kommunikationsvorrichtung überschneidet, die mit dem ersten Netzwerk (31) verbunden ist, undzum Benachrichtigen der ersten Kommunikationsvorrichtung (51) über die Zieladresse; und
ein Übertragungsmittel (106, 107) zum Übersetzen, wenn ein Paket mit der bestimmten Zieladresse von der ersten Kommunikationsvorrichtung (51) empfangen wird, der Zieladresse des Pakets und einer Übertragungsquelladresse des Pakets in vorbestimmte Adressen, die in dem virtuellen privaten Netzwerk (4) verwendet werden, in Übereinstimmung mit einer Kombination der Zieladresse des Pakets und der Übertragungsquelladresse des Pakets undzum Übertragen des Pakets an das virtuelle private Netzwerk (4).

2. Übertragungsvorrichtung nach Anspruch 1, wobei das Bestimmungsmittel (103) dafür konfiguriert ist, wenn keine Informationen gespeichert sind, dass eine Kommunikation zwischen der ersten Kommunikationsvorrichtung (51) und der zweiten Kommunikationsvorrichtung (52) über das virtuelle private Netzwerk (4) zulässig ist, eine Steuerung (2) des virtuellen privaten Netzwerks (4)abzufragen, ob eine Kommunikation zwischen der ersten Kommunikationsvorrichtung (51) und der zweiten Kommunikationsvorrichtung (52) über das virtuelle private Netzwerk (4) zulässig ist.

3. Übertragungsvorrichtung nach Anspruch 1, wobei die im virtuellen privaten Netzwerk (4) verwendeten vorbestimmten Adressen von einer Steuerung (2) des virtuellen privaten Netzwerks (4) erhalten werden.

4. Übertragungsvorrichtung nach einem der Ansprüche 1 bis 3, wobei das Adressbestimmungsmittel (104) dafür konfiguriert ist, wenn eine Kommunikation zwischen der ersten Kommunikationsvorrichtung (51) und der zweiten Kommunikationsvorrichtung (52) über das virtuelle private Netzwerk (4) nicht zulässig ist, einen Server im Internet für die Adresse der zweiten Kommunikationsvorrichtung (52) abzufragen undwenn die Adresse der zweiten Kommunikationsvorrichtung (52) von dem Server im Internet erhalten werden kann, Informieren der ersten Kommunikationsvorrichtung (51) über die erhaltene Adresse.

5. Übertragungsvorrichtung nach einem der Ansprüche 1 bis 4, wobei das Bestimmungsmittel (103) dafür konfiguriert ist, wenn eine Kommunikation zwischen einer einer Vielzahl von Kommunikationsvorrichtungen des ersten Netzwerks (31) und einer einer Vielzahl von Kommunikationsvorrichtungen des zweiten Netzwerks (32) über das virtuelle private Netzwerk (4) zulässig ist, die Vielzahl von Kommunikationsvorrichtungen des ersten Netzwerks (31) und die Vielzahl von Kommunikationsvorrichtungen des zweiten Netzwerks (32) als Gruppe zu verwalten.

## Revendications

1. Appareil de transfert (11) destiné à être connecté à un premier réseau (31) et à un réseau privé virtuel (4) et à transférer un paquet entre le premier réseau (31) et le réseau privé virtuel (4) pour une communication entre un appareil de communication du premier réseau (31) et un appareil de communication d'un second réseau (32) par l'intermédiaire du réseau privé virtuel (4), l'appareil de transfert (11) comprenant :
un moyen de détermination (103) pour déterminer, quand une demande de communication avec un second appareil de communication (52) du second réseau (32) ou une interrogation relative à une adresse du second appareil de communication (52) est reçue depuis un premier appareil de communication (51) du premier réseau (31), qu'une communication entre le premier appareil de communication (51) et le second appareil de communication par l'intermédiaire du réseau privé virtuel (4) est autorisée ou non ;
un moyen de détermination d'adresse (104) destiné à déterminer, quand une communication entre le premier appareil de communication (51) et le second appareil de communication (52) par l'intermédiaire du réseau privé virtuel (4) est autorisée, une adresse de destination que le premier appareil de communication (51) utilise quand il communique avec le second appareil de communication (52), et qui ne chevauche pas une adresse d'un appareil de communication qui se connecte au premier réseau (31), et à notifier l'adresse de destination au premier appareil de communication (51) ; et
un moyen de transmission (106, 107) destiné à traduire, quand un paquet comportant l'adresse de destination déterminée est reçu depuis le premier appareil de communication (51), l'adresse de destination du paquet et une adresse de source de transmission du paquet en des adresses prédéterminées utilisées dans le réseau privé virtuel (4) conformément à une combinaison de l'adresse de destination du paquet et de l'adresse source de transmission du paquet, et à transmettre le paquet au réseau privé virtuel (4).

2. Appareil de transfert selon la revendication 1, dans lequel le moyen de détermination (103) est configuré pour interroger, quand il ne détient pas d'informations qu'une communication entre le premier appareil de communication (51) et le second appareil de communication (52) par l'intermédiaire du réseau privé virtuel (4) est autorisée, un contrôleur (2) du réseau privé virtuel (4) pour déterminer qu'une communication entre le premier appareil de communication (51) et le second appareil de communication (52) par l'intermédiaire du réseau privé virtuel (4) est autorisée ou non.

3. Appareil de transfert selon la revendication 1, dans lequel les adresses prédéterminées utilisées dans le réseau privé virtuel (4) sont obtenues à partir d'un contrôleur (2) du réseau privé virtuel (4).

4. Appareil de transfert selon l'une quelconque des revendications 1 à 3, dans lequel le moyen de détermination d'adresse (104) est configuré pour interroger, quand une communication entre le premier appareil de communication (51) et le second appareil de communication (52) par l'intermédiaire du réseau privé virtuel (4) n'est pas autorisée, un serveur sur l'Internet à la recherche de l'adresse du second appareil de communication (52), et, quand l'adresse du second appareil de communication (52) peut être obtenue auprès du serveur sur l'Internet, notifier l'adresse obtenue au premier appareil de communication (51) .

5. Appareil de transfert selon l'une quelconque des revendications 1 à 4, dans lequel le moyen de détermination (103) est configuré pour gérer, quand une communication entre n'importe lequel d'une pluralité d'appareils de communication du premier réseau (31) et n'importe lequel d'une pluralité d'appareils de communication du second réseau (32) par l'intermédiaire du réseau privé virtuel (4) est autorisée, la pluralité d'appareils de communication du premier réseau (31) et la pluralité d'appareils de communication du second réseau (32) en tant que groupe.
